# EUROPEAN PATENT APPLICATION

(11) **EP 3 639 898 A1**
(43) Date of publication of application: **22.04.2020**
(21) Application number: 17913146.1
(22) Date of filing: 29.12.2017
(51) Int. Cl.: A62C 27/00, A62C 5/02

(54) **MOBILE FIRE EXTINGUISHING APPARATUS WITH PRESSURIZED FOAM GENERATION**

(30) Priority: 14.06.2017 RU 2017120828; 14.06.2017 RU 2017120827
(71) Applicant: Joint Stock Company "Rosenergoatom", Moscow 109507 (RU); Limited, Liability Company "The Ural-Siberian Fire-Fighting And Technological Company", Chelyabinskaya obl., g. Chelyabinsk 454000 (RU); Joint Stock Company "Science and Innovations", Moscow 119180 (RU)
(72) Inventor: BURDIN, Aleksandr Mikhailovich, g. Chelyabinsk 454048 (RU)
(74) Representative: Friese Goeden Patentanwälte PartGmbB
(86) International application number: PCT/RU2017/001013
(87) International publication number: WO 2018/231096

(57) **Abstract**

The inventions relate to fire-fighting ground vehicles. A mobile fire extinguishing apparatus with pressurized foam generation comprises: a mixing chamber connected at the outlet to a device for supplying foam to the heart of a fire; and, connected by pipes to an inlet of the mixing chamber, a water supply system comprising a water supply pump with a drive, a foam-forming concentrate supply system comprising a foam pump with a drive, and also an air supply system comprising an air compressor with a drive. The apparatus is provided with a driving motor. The drives of the compressor and of the foam pump are in the form of an adjustable hydraulic transmission of the air compressor drive and an adjustable hydraulic transmission of the foam pump drive, which are kinematically connected to the driving motor. The apparatus is also provided with a water meter, a gate valve having an electric drive, and a non-return valve, which are mounted on a water supply pipe between the water supply pump and the mixing chamber, and is further provided with an electronic control unit for the gate valve. An input of the gate valve control unit is electrically connected to an output of the water meter, and an output of the gate valve control unit is electrically connected to an input of the electric drive of the gate valve. This makes it possible to produce foam having the necessary delivery pressure and density under any pump operating modes.

## Description

The group of inventions relates to fire-fighting equipment, namely to fire-fighting ground vehicles with foam generation by compression method
In the article "Portable installation for producing compression (gas-filled) foam" (authors: M. Shavaleev, R., V. A. Koksharov) known apparatus for creating compression (gas-filled) foam, which simultaneously aimed at cooling the combustion zone and its isolation from the oxygen in the air (Shavaleev, R. M., Koksharov V. A. Portable installation for obtaining compression (gas-filled) foam / / Journal "Modern technologies of civil defense and liquidation of consequences of emergency situations", published by the Voronezh Institute of State fire service of the Ministry of the Russian Federation for civil defense, emergency situations and liquidation of consequences of natural disasters". - 2015, Issue # 1 (6) / volume 1. Pp. 216-220). The use of compression foam in comparison with water has a number of advantages: low recoil and ease of holding the fire barrel when applying extinguishing agent; low weight of the sleeve, which facilitates the movement of the receiver; the ability to supply foam through the dry pipe to a height of up to 250 meters at a pressure in the system of not more than 10 ATM.; low vaporization, which leads to improved visibility when extinguishing; improved foam feeding accuracy and reduced risk of burn injuries to firefighters; low thermal conductivity of the foam, which makes it easier to work in low temperatures. Also, in the source of information disclosed circuit of a portable installation consisting of metal tubing, the ends of which contain a coupling head for connection to the hoses, on the one hand to a fire pump (pump for water) and the other to the feeder of the foam in the fire (fire hose, hand gun, gun carriage); dosing system and supply of foaming agents (foam-making concentrate) and feed system of the air cylinders personal protective equipment respiratory system through the gearbox. The foaming agent dosing and feeding system, designed for feeding and dosing the foaming agent into the installation from a third-party container, includes a submersible pump that takes the foaming agent from the third-party container and under pressure transports it to the feeder. The feeding device is structurally a Pitot tube, the bent end of which is turned in the direction of fluid movement. To dose the foaming agent in front of the feeder is a crane, opening or closing which regulates the saturation of the foaming agent solution. The foaming agent under the action of the folding turbulent regime is mixed with water. At the same time, the qualitative parameters of the compression foam are regulated by the flow rate of the foaming agent solution with the help of a crane. Proposed in this article, the design of a portable installation for obtaining compression foam is mainly aimed at upgrading existing mobile fire-fighting installations in order to expand their functionality while reducing the cost of such expansion.

The disadvantages of the disclosed installation are:
- the need to use compressed air cylinders;
- the need for an operational manual setting modernized with its help, fire-fighting installation in which manual setting should be implemented, including when changing the feed pressure of any component foam (water, foaming concentrate, compressed air), for example, if you install from source with support (fire hydrants, etc.);
- the lack of automatic adjustment of the feed pressure of water, even the foam concentrate and compressed air at the pressure change at the outlet of installation (back pressure) depending on the hydraulic resistance of the hoses which carry the supply of finished foam and the geometric height of the foam rise on these sleeves, to overcome which you want to change the pressure of these components in the manual mode that is even more difficult in the absence of direct line of sight of the jet with the place of work of the operator;
- lack of automation of the process of creating a compression foam, as in the systems of dosage and supply of foaming agent and air supply from cylinders of personal respiratory protection there are no controllers controlling the operation of the devices, which control depending on the required and current characteristics of the finished foam, which requires manual adjustment of the foam components;
- the need for rapid manual adjustment of the modernized fire-fighting installation in which manual setting should be implemented, including when changing the feed pressure of any component foam (water, foaming concentrate, compressed air), for example, if you install from source with support (fire hydrants, etc.), as well as changes in outlet pressure dependent hydraulic resistance of the hoses which carry the supply of finished foam and the geometric height of the foam rise on these sleeves;
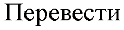 BGoogleBing- lack of maintenance elements of the proposed installation, including drainage and washing systems..- lack of maintenance elements of the proposed installation, including drainage and washing systems.

Also, the patent for the invention RF Nº 2580779 published 10.04.2016 G., IPC A62C 27/00, known mobile robotic complex fire, including fire-extinguishing system foam compression, consisting of a mixer, centrifugal pump, solenoid valve, pressure switch, auxiliary high pressure pipeline, fire monitors fire barrel and pressure transducer (reducer). The mixer provides connection of the fire hose from the tanker or fire hydrant and foaming agent through the inlet pipes with quick-release connecting heads. The centrifugal pump with hydraulic drive provides a capacity of 31 1 / s. In addition, the high-pressure pipeline has a quick-release connection to connect an additional fire hose to the hand barrel (hose). Also, the specified fire extinguishing system includes a foam generating device, a container with water, a container with compressed air and a container with a foaming agent. The main element of this installation is a foam generating device, which from water and foaming agent with the use of compressed air provides the formation of air-mechanical foam of low multiplicity (compression foam), while the air is supplied to the system from a high-pressure cylinder through a reducer that reduces the pressure to the operating level. Storage of foaming agent is carried out in a special tank. In standby mode, the tank is under atmospheric pressure, when the unit is started, it is inflated with air. The mixture is used when extinguishing fires away from water bodies or when extinguishing fires that require fire measures of high complexity. The resulting compression foam is fed through the carriage barrel to the fire center. Disadvantages of the known installation are:
- the need to use compressed air cylinders that supply not only the compressed air and the supply of foaming agent, which in the case of the end of the compressed air in the cylinders, making it impossible to fire extinguishing by compression foam;
- lack of maintenance elements of the proposed installation, including drainage and washing systems.

The closest analogue of the proposed mobile fire extinguishing system with foam generation by compression method is the fire extinguishing system CAFSPro (fire extinguishing system CAFSPro) manufactured by HALE PRODUCTS, INC., disclosed in the user manual published on the Internet site: https://lacountyfirefighters.org/items/QMAX_MUSCLE_PUMP_CAFS_Manual.pdf

The known technical solution is a system consisting of the following main elements: a centrifugal fire pump (fire pump or pump for water supply), which provides water supply with the necessary overpressure; a volumetric pump, which provides the supply and injection (injection) of the foaming concentrate into the water stream in order to obtain the initial foaming solution (foam pump); a dosing device that provides automatic regulation of the amount of foaming concentrate (hereinafter - PO), directed to injection into the water stream (PO dispenser); air compressor providing compressed air at the initial foam-forming solution, after mixing with which to install the finished foam is generated (compressor); manual transmission that provides drive air compressor from the shaft of the fire pump via a belt drive (belt transmission); the mixing chamber, generating foam by mixing a source of foaming solution and compressed air (mixing chamber); measuring devices, electronic control units, shut-off valves, pipelines and other switching elements.

The principle of operation of the known technical solution is based on obtaining foam from three initial components: water, foaming concentrate and compressed air, which in a certain dosage enter the mixing chamber, where, undergoing intensive bubbling, they turn into a ready foam due to the presence of the initial liquid surface active properties.

Thus, depending on the used foaming agent concentrate, and also depending on what kind of foam density required to obtain at the output in each case of its use (determined by the tactics of fire suppression), the proportions of the constituents of the foam (water, foaming agent and compressed air) may vary the operator using the respective presets. In particular, in certain cases, for fire extinguishing can be used or lighter foam - with a large relative air content, which is called "dry", or heavier-with a lower relative air content, which is called "wet".

The required proportions of the components of the foam, entered by the operator as presets, are provided by means of special automatic regulators, which, depending on the current water flow, carry out a metered injection of the desired amount of foaming concentrate and the desired amount of compressed air.

Dosing of foaming concentrate is carried out with the help of a special foam pump and DISPENSER. Dosing is carried out by varying the speed of the foam pump, the performance of which varies quasi-proportionally to the speed. The required (target) speed value is calculated according to the specified proportion, based on the current water flow. The water flow rate is measured continuously with the help of an appropriate device-a water flow meter.

Dosing of compressed air is carried out with the help of special pneumatic equipment, controlled automatically according to the readings of the air flow meter and preset settings, depending on the current water flow. In this case, the speed of the compressor is not regulated, since it is determined only by the parameters of the belt drive and the speed of the fire pump, and the latter is set by the operator according to the criterion of obtaining the desired water pressure at the outlet of the fire pump.

The disadvantages of this technical solution, chosen as the closest analogue, are:
- the limitations of its use when working from a backwater water sources (fire hydrants, etc.), which is due to the presence of a single actuator of the compressor and fire pump, as in the presence of backwater at the entrance to the fire pump to obtain the desired pressure at its output, you must set the rotation of the fire pump with reduced speed (until it stops), while for the compressor connected to the fire pump mechanical transmission of such rotation is insufficient to provide the desired performance on compressed air. In this case, additional disadvantages of using a single compressor drive and a fire pump are the inability to ensure the spaced installation of these elements in the compartments of the car, as well as the inability to regulate the speed of rotation of the compressor, in particular, to provide a smooth start and stop;
- dependence of its output characteristics (intensity and range of the foam jet) on the hydraulic resistance of the pressure hoses through which the finished foam is fed, and on the geometric height of the foam lift through these sleeves. Both of these values cause the so-called backpressure at the outlet of the installation, with an increase in which the flow of water (and, as a consequence, both other components of the foam-foaming concentrate and compressed air) will decrease, until complete cessation. To compensate for this decrease in intensity, the operator must manually adjust the pressure at the outlet of the fire pump, which is not always possible due to the lack of direct visibility of the jet from the operator's place of work.

The task solved by the proposed group of inventions is to increase the stability, reliability and performance of the mobile fire extinguishing system.

The technical result achieved by the group of inventions is the possibility of obtaining the necessary foam head and density. The task solved by the proposed group of inventions is to increase the stability, reliability and performance of the mobile fire extinguishing system.

The technical result achieved by the group of inventions is the possibility of obtaining the necessary foam head and density.

The technical result achieved by the first claimed technical solution consists in the possibility of obtaining the necessary foam pressure and density at any operating modes of the water supply pump, including without switching on the water supply pump, in automatic mode with varying foam backpressure at the outlet of the mobile fire extinguishing unit.

This technical result is achieved due to the fact that mobile fire-extinguishing installation with the generation of foam compression method, including a mixing chamber connected to the output feeder of the foam in the fire, and connected by piping to the entrance of the mixing chamber, the water supply system, including feed water pump and the pump drive the water supply system of the blowing agent concentrate comprising a foam pump and drive the foam pump and the air supply system including air compressor and air compressor drive according to the claimed solution, in addition, it includes a drive motor, equipped with a water flow meter installed on the water supply pipeline between the water supply pump and the mixing chamber, an electrically operated throttle valve and a check valve, as well as an electronic throttle valve control unit, the input of the control unit throttle valve is electrically connected with the output of water flow meter, and the output control unit throttle valve electrically connected to the input of the actuator of the throttle valve and drives the air compressor and foam pump made in the form of adjustable hydraulic transmission actuator of an air compressor and adjustable hydraulic transmission actuator, foam pump, kinetically connected to a drive motor.

An internal combustion engine or an electric motor is preferably installed as a drive motor, wherein the drives of the air compressor and the foam pump are predominantly independent of the fire pump drive.

In this case, the adjustable hydraulic transmission of the air compressor drive may include an adjustable hydraulic pump and an unregulated hydraulic motor of the air compressor drive connected to it by pipelines. Also, the adjustable hydraulic transmission of the foam pump drive may include an adjustable hydraulic pump and an unregulated hydraulic motor of the foam pump drive connected to it by pipelines.

In addition, the water supply system may contain a water tap, a water flow meter, a water drain valve, an electrically operated throttle valve and a check valve installed in series on the pipeline between the water supply pump and the mixing chamber, and may also be provided with an electronic throttle valve control unit, wherein the electric output of the water flow meter is electrically connected to the input of the electronic throttle valve control unit, and the output of the electronic control unit of the throttle valve is connected by an electric conductor to the input of the electric drive of the throttle valve. In addition, the foaming concentrate supply system may include a foaming concentrate container and a foaming concentrate feed valve, a foam pump, a foaming concentrate drain valve, a foaming concentrate flowmeter, a foaming concentrate check valve installed in series on the pipeline between the foaming concentrate container and the mixing chamber, and may also be equipped with an electronic control unit of the foaming concentrate supply system, inputs of which are connected by electrical conductors to the outputs of the rotation sensor of the foam pump and flow meter of the blowing agent concentrate, and the output connected by an electric conductor with the input of the adjustable hydraulic pump hydraulic transmission drive the foam pump. In this case, the air supply system may be provided with successively installed on the pipeline between the air compressor and mixing chamber three-way valve and return air valve, and an electronic control unit of the air-supply system, the output of which is connected by an electric conductor with the input of the adjustable hydraulic pump hydraulic transmission actuator of an air compressor and an input coupled to a rotation sensor for air compressor. On top of that electrical input to the electronic control unit supply system of the blowing agent concentrate and the electrical input of the electronic control unit air supply can be electrically connected with an electric output of a water flow meter or the electrical output of the electronic control unit throttle valve. Also, the air supply system can be connected to the water supply system by a pipeline containing a series-mounted non-return dehumidification valve and a dehumidification valve. The water supply system can be connected to the foaming concentrate supply system by a pipeline containing a flushing tap.

The mobile fire extinguishing system can be installed on the chassis of a land vehicle or on railway mobile platforms.

The technical result achieved the claimed technical the second solution is the ability to obtain the necessary for pressure and density foam in all modes of pump operation for water supply, including pump start water flow if the water pressure in the fire hydrant would be sufficient for supplying water without additional increase of the pressure of the feed water pump or with the pump water flow at lower speeds, particularly when taking water from fire hydrants with insufficient support, and also in providing the ability to perform speed control of the compressor, in particular, in providing a smooth start and stop of the compressor.

This technical result is achieved due to the fact that mobile fire-extinguishing installation with the generation of foam compression method, including a mixing chamber connected to the output feeder of the foam in the fire, and associated with the entrance of the mixing chamber by pipelines, the water supply system, including feed water pump to the actuator, the supply system of the blowing agent concentrate comprising a foam pump driven foam pump and the air supply system including air compressor drive according to the claimed solution, is further provided with a drive motor and drives the air compressor and foam pump made in the form of kinetically coupled with a drive motor adjustable hydraulic transmission actuator of an air compressor and adjustable hydraulic transmission drive the foam pump.

Preferably, an internal combustion engine or an electric motor is installed as a drive motor. The air compressor and foam pump drives are predominantly independent of the fire pump drive.

In this case, the adjustable hydraulic transmission of the air compressor drive may include an adjustable hydraulic pump and an unregulated hydraulic motor of the air compressor drive connected to it by pipelines. Also, the adjustable hydraulic transmission of the foam pump drive may include an adjustable hydraulic pump and an unregulated hydraulic motor of the foam pump drive connected to it by pipelines.

In addition, the water supply system may contain a water tap, a water flow meter, a water drain valve, an electrically operated throttle valve and a check valve installed in series on the pipeline between the water supply pump and the mixing chamber, and may also be provided with an electronic throttle valve control unit, wherein the electric output of the water flow meter is electrically connected to the input of the electronic throttle valve control unit, and the output of the electronic control unit of the throttle valve is connected by an electric conductor to the input of the electric drive of the throttle valve. In addition, the foaming concentrate supply system may include a foaming concentrate container and a foaming concentrate feed valve, a foam pump, a foaming concentrate drain valve, a foaming concentrate flowmeter, a foaming concentrate check valve installed in series on the pipeline between the foaming concentrate container and the mixing chamber, and may also be equipped with an electronic control unit of the foaming concentrate supply system, inputs of which are connected by electrical conductors to the outputs of the rotation sensor of the foam pump and flow meter of the blowing agent concentrate, and the output connected by an electric conductor with the input of the adjustable hydraulic pump hydraulic transmission drive the foam pump. In this case, the air supply system may be provided with successively installed on the pipeline between the air compressor and mixing chamber three-way valve and return air valve, and an electronic control unit of the air-supply system, the output of which is connected by an electric conductor with the input of the adjustable hydraulic pump hydraulic transmission actuator of an air compressor and an input coupled to a rotation sensor for air compressor. On top of that electrical input to the electronic control unit supply system of the blowing agent concentrate and the electrical input of the electronic control unit air supply can be electrically connected with an electric output of a water flow meter or the electrical output of the electronic control unit throttle valve.

Also, the air supply system can be connected to the water supply system by a pipeline containing a series-mounted non-return dehumidification valve and a dehumidification valve. The water supply system can be connected to the foaming concentrate supply system by a pipeline containing a flushing tap.

Also, the mobile fire extinguishing system can be installed on the chassis of a land vehicle or on railway mobile platforms.

The technical result achieved by the third claimed technical solution consists in the possibility of obtaining in automatic mode the required pressure and density of foam with varying back pressure of foam at the outlet of the mobile fire extinguishing installation, as a result of changing the hydraulic resistance of the pressure hoses and the geometric height of the foam rise along these sleeves, while achieving the highest efficiency of the installation due to a stable foam supply mode, which is maintained automatically, regardless of possible variations in the characteristics of the pressure line at the outlet of the mobile fire extinguishing system.

This technical result is achieved due to the fact that mobile fire-extinguishing installation with the generation of foam compression method, including a mixing chamber connected to the output feeder of the foam in the fire, and connected by piping to the entrance of the mixing chamber, the water supply system, including feed water pump and the pump drive the water supply system of the blowing agent concentrate comprising a foam pump and drive the foam pump and the air supply system including air compressor and air compressor drive according to the claimed solution, equipped with installed on the water feed line between the feed water pump and a mixing chamber with a water meter, butterfly valve with electric actuator and electronic control unit throttle valve, the input of the control unit throttle valve is electrically connected with the output of water flow meter, and the output control unit throttle valve electrically connected to the input of the actuator of the throttle valve.

At the same time, the foaming concentrate supply system may include a foaming concentrate container and a foaming concentrate feed valve, a foam pump, a foaming concentrate drain valve, a foaming concentrate flowmeter, a foaming concentrate check valve installed in series on the pipeline between the foaming concentrate container and the mixing chamber, and may also be equipped with an electronic control unit of the foaming concentrate supply system, inputs of which are connected by electrical conductors to the outputs of the rotation sensor of the foam pump and flow meter of the blowing agent concentrate, and the output connected by an electric conductor with the input of the adjustable hydraulic pump hydraulic transmission drive the foam pump. Also, the air supply system may be provided with successively installed on the pipeline between the air compressor and mixing chamber three-way valve and return air valve, and an electronic control unit of the air-supply system, the output of which is connected by an electric conductor with the input of the adjustable hydraulic pump hydraulic transmission actuator of an air compressor and an input coupled to a rotation sensor for air compressor. Mainly electrical input of the electronic control unit supply system of the blowing agent concentrate and the electrical input of the electronic control unit of the air-supply system electrically connected to an electric outlet or water flow meter with an electric output of the electronic control unit throttle valve.

The mobile fire extinguishing system can be installed on the chassis of a land vehicle or on railway mobile platforms.

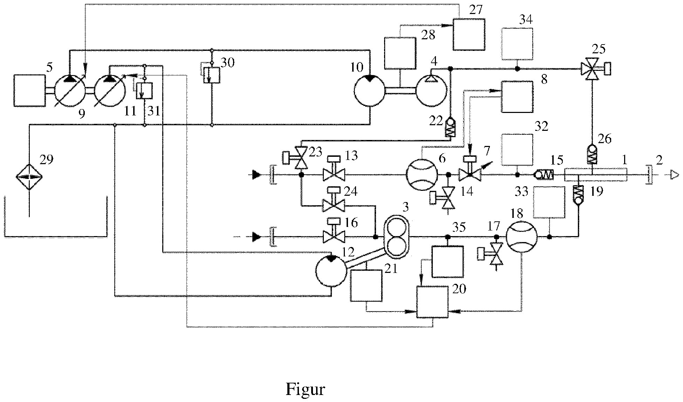

The group of the claimed inventions is illustrated by a graphic material, where the figure shows a functional diagram of a mobile fire extinguishing installation with foam generation by a compression method.

The first proposed technical solution - a mobile fire extinguishing system with foam generation by compression method, is explained by the specific execution described below, however, the example given is not the only possible one, but clearly demonstrates the possibility of achieving this set of essential features of the claimed technical result.

Mobile installation of fire extinguishing with the generation of foam compression method includes a mixing chamber 1 that is connected on the output device 2 supplying foam to the fire, and associated with the entrance of the mixing chamber 1 by a piping system of water supply, including feed water pump (not shown in the diagram) to the actuator, the supply system of the blowing agent concentrate comprising a foam pump 3 driven foam pump and the air supply system including air compressor 4 driven. In this case, the mobile fire-extinguishing installation is further provided with a drive motor 5 and drives the air compressor 4 and the foam pump 3 made in the form of kinetically coupled with a drive motor 5 adjustable hydraulic transmission drive the air compressor 4 and the adjustable hydraulic transmission actuator, foam pump 3. Mobile fire suppression system is equipped with installed on the water feed line between the feed water pump (in the figure not shown) and the mixing chamber 1 water meter 6, the throttle valve 7 by the actuator (in the figure not shown), and an electronic unit 8 throttle valve 7, the inlet block 8 electronic control throttle valve 7 is electrically connected with the output of the water meter 6, and the output of the electronic unit 8 throttle valve 7 is electrically connected to the input of the actuator of the throttle valve 7.

An internal combustion engine is installed as the drive engine 5. An electric motor can be used instead of an internal combustion engine.

The adjustable hydraulic transmission of the air compressor drive 4 includes an adjustable hydraulic pump 9 and an unregulated hydraulic motor 10 of the air compressor drive 4 connected to it by pipelines.

The adjustable hydraulic transmission of the foam pump drive 3 includes an adjustable hydraulic pump 11 and an unregulated hydraulic motor 12 connected to it by pipelines of the foam pump drive 3.

The water supply system contains successively installed on the piping between the feed water pump (not shown in the diagram) and the mixing chamber 1 a water valve 13, flow meter 6 water faucet to drain the water 14, the throttle valve 7 by the actuator (the actuator for the circuit shown) and a check valve 15 and includes an electronic unit 8 throttle valve 7, the electrical output of the flowmeter 6 water is electrically connected with the input of the electronic unit 8 throttle valve 7, and the output of the electronic control unit 8 of the throttle valve 7 is connected by an electric conductor to the input of the electric drive of the throttle valve 7.

The foaming concentrate supply system includes a container for foaming concentrate (not shown in the figure) and a valve 16 for supplying foaming concentrate, a foam pump 3, a crane 17 for draining the foaming concentrate, a flowmeter 18 for foaming concentrate, a check valve 19 for foaming concentrate, and is equipped with an electronic control unit 20 for the foaming concentrate supply system, the inputs of which are connected by electrical conductors to the outputs of the rotation sensor 21 of the foam pump 3 and the flowmeter 18 of the foaming concentrate, and the output of which is connected by an electrical conductor to the input of the adjustable hydraulic pump 11 of the hydraulic transmission of the foam pump 3.

The air supply system is connected to the water supply system by a pipeline containing a series-mounted check valve 22 dehumidification and a valve 23 dehumidification.

In addition, the water supply system is connected to the foaming concentrate supply system by a pipeline containing a wash valve 24.

The air supply system provided with a sequentially mounted on the pipeline between the air compressor 4 and the mixing chamber 1 by the three-way tap 25 and check valve 26 air and electronic unit 27 of the control system air supply, the output of which is connected by an electric conductor with the input of the adjustable hydraulic pump 9 hydraulic transmission air compressor drive 4 and the input of which is electrically connected to the output of the sensor 28 of rotation of the air compressor 4.

In addition, the electrical input of the electronic control unit 20 of the foaming concentrate supply system and the electrical input of the electronic control unit 27 of the air supply system are electrically connected to the electrical output of the water flowmeter 6 (the connection is not shown in the figure). To obtain data on the current water flow, these electrical inputs can be electrically connected to the electrical output of the electronic control unit 8 by the throttle valve 7, which receives this data from the water flowmeter 6.

The drives of the air compressor 4 and the foam pump 3 are independent of the fire pump drive (not shown in the figure).

The mobile fire extinguishing system is installed on the chassis of a ground vehicle (not shown in the figure), and it can be installed on railway mobile platforms.

A functional diagram of a mobile fire extinguishing systems with foam generating compression method is depicted in the figure, contains the following additional elements are part of the fire suppression system, including: a heat exchanger 29, which provide cooling oil to the adjustable hydraulic transmission drive the air compressor 4 and the adjustable hydraulic transmission actuator, foam pump 3; safety valves 30 and 31, providing protection of the adjustable hydraulic transmission of the air compressor drive 4 and the adjustable hydraulic transmission of the foam pump drive 3 from exceeding the prescribed oil pressure; water pressure sensor 32, foam concentrate pressure sensor 33 and air pressure sensor 34, providing the operator with information about the current state of the system; sensor 35 filling the foaming concentrate supply system, the electrical output of which is connected to the input of the electronic control unit 20 of the foaming concentrate supply system.

Mobile fire extinguishing system with foam generation by compression method, relating to the first technical solution, works as follows.

Required water pressure is supplied to the water supply system with a pump water flow (figure not shown) from a reservoir (tank) (figure not shown), or by using a fire hydrant without an incremental increase in water pressure by the feed water pump or through a fire hydrant with an incremental increase in water pressure with a feed water pump that is selected depending on places of use. In the water supply system, the water pressure is controlled by the electronic control unit 8 using the water flowmeter 6, and is changed as necessary by the throttle valve 7, after which the water flows through the check valve 15 to the mixing chamber 1. Thus, when the foam backpressure increases or decreases at the outlet of the mobile fire extinguishing unit, the water flowmeter 6 records the data on the increase or decrease in the water flow rate, respectively, and directs them to the control unit 8, which, in accordance with a given type of foam (lighter ("dry") foam or heavier ("wet") foam) controls the opening value of the throttle valve 7, so that the necessary water pressure for the formation of compression foam enters the mixing chamber 1.

The drive motor 5 drives the hydraulic pump 9 and the hydraulic pump 11.

Depending on the water pressure, the data on which is received from the water flowmeter 6 (or the electronic control unit 8) to the electronic control unit 20 of the foaming concentrate supply system, the latter controls the operation of the adjustable hydraulic pump 11 of the hydraulic transmission of the drive, which drives the unregulated hydraulic motor 12, which in turn is the drive of the foam pump 3. In this case, the electronic unit 20 control the flow of the foaming concentrate receives data on the frequency of rotation of the foam pump 3 via the sensor 21 of the rotation of the foam pump, the flow rate of the blowing agent concentrate with a flow meter 18, and the filling of the supply system foaming concentrate by means of the sensor 35 fill. Depending on the required qualities of the foam-lighter ("dry") foam or heavier ("wet") foam at different water pressure, the foam pump 3 delivers from the tank (tank) (not shown in the figure) foaming concentrate through the check valve 19 to the mixing chamber 1 the required amount of foaming concentrate with the required head.

Depending on the water pressure, the data on which is received from the water flowmeter 6 (or the electronic control unit 8) to the electronic control unit 27 of the air supply system, the latter controls the operation of the adjustable hydraulic pump 9 of the hydraulic transmission of the drive, which drives the unregulated hydraulic motor 10, which in turn is the drive of the compressor 4. The electronic control unit 27 of the air supply system receives data on the frequency of rotation of the compressor 4 using the compressor rotation sensor 28. Depending on the required foam qualities-lighter ("dry") foam or heavier ("wet") foam at different water pressure, the compressor 4 delivers compressed air through the check valve 26 to the mixing chamber 1 the required amount of air under the required pressure.

Mobile fire extinguishing systems with foam generating compression method can control the system water flow by the sensor 32 of the water pressure, the supply system foaming concentrate with the help of the sensor 33 pressure of the blowing agent concentrate and the system air supply with a sensor 34 of the air pressure. On the basis of the obtained data, the operator can increase the water supply pressure, including by adjusting the opening of the throttle valve 7, at the same time, with a given type of foam, the foaming concentrate supply system and the air supply, the foaming concentrate supply pressure and the air supply pressure can be automatically changed. At the same time, according to the required parameters, the operator can also change the supply pressure of the foaming concentrate and the pressure of the supplied air, regardless of the supply water pressure.

In the mixing chamber 1, where the required amount of water, foaming concentrate and air are supplied under pressure, intensive borbotirovanie occurs, in which these components are converted into a finished foam. The finished foam from the mixing chamber 1 enters the device 2 foam supply to the fire.

After using a mobile fire extinguishing system with foam generation by compression method in the mode of obtaining compression foam, the said installation can be washed by closing the water tap 13, opening the washing tap 24, closing the foaming concentrate supply tap 16, and supplying water with a water supply pump (not shown in the figure) under pressure through the foaming concentrate supply system until the foaming concentrate residues are completely cleaned. After that, the mobile fire extinguishing unit with foam generation by compression method can be dried by closing the three-way tap 25, opening the drainage tap 23, closing the water supply tap (not shown in the figure), opening the water tap 13, opening the flushing tap 24, closing the foaming concentrate supply tap 16, and supplying air with the compressor 4 through the non-return valve 22, the water supply system and the foaming concentrate supply system, including through the open tap 17 for draining the foaming concentrate and the tap 14 for draining the water, until they draining.

The second proposed technical solution-a mobile fire extinguishing system with foam generation by compression method, is explained by the specific execution described below, however, the example given is not the only possible one, but clearly demonstrates the possibility of achieving this set of essential features of the claimed technical result.

Mobile installation of fire extinguishing with the generation of foam compression method includes a mixing chamber 1 that is connected on the output device 2 supplying foam to the fire, and associated with the entrance of the mixing chamber 1 by a piping system of water supply, including feed water pump (not shown in the diagram) to the actuator, the supply system of the blowing agent concentrate comprising a foam pump 3 driven foam pump and the air supply system including air compressor 4 driven. In this case, the mobile fire-extinguishing installation is further provided with a drive motor 5 and drives the air compressor 4 and the foam pump 3 made in the form of kinetically coupled with a drive motor 5 adjustable hydraulic transmission drive the air compressor 4 and the adjustable hydraulic transmission actuator, foam pump 3.

An internal combustion engine is installed as the drive engine 5. An electric motor can be used instead of an internal combustion engine.

The adjustable hydraulic transmission of the air compressor drive 4 includes an adjustable hydraulic pump 9 and an unregulated hydraulic motor 10 of the air compressor drive 4 connected to it by pipelines.

The adjustable hydraulic transmission of the foam pump drive 3 includes an adjustable hydraulic pump 11 and an unregulated hydraulic motor 12 connected to it by pipelines of the foam pump drive 3.

The water supply system contains successively installed on the piping between the feed water pump (not shown in the diagram) and the mixing chamber 1 a water valve 13, flow meter 6 water faucet to drain the water 14, the throttle valve 7 by the actuator (the actuator for the circuit shown) and a check valve 15 and includes an electronic unit 8 throttle valve 7, the electrical output of the flowmeter 6 water is electrically connected with the input of the electronic unit 8 throttle valve 7, and the output of the electronic control unit 8 of the throttle valve 7 is connected by an electric conductor to the input of the electric drive of the throttle valve 7.

The foaming concentrate supply system includes a container for foaming concentrate (not shown in the figure) and a valve 16 for supplying foaming concentrate, a foam pump 3, a crane 17 for draining the foaming concentrate, a flowmeter 18 for foaming concentrate, a check valve 19 for foaming concentrate, and is equipped with an electronic control unit 20 for the foaming concentrate supply system, the inputs of which are connected by electrical conductors to the outputs of the rotation sensor 21 of the foam pump 3 and the flowmeter 18 of the foaming concentrate, and the output of which is connected by an electrical conductor to the input of the adjustable hydraulic pump 11 of the hydraulic transmission of the foam pump 3.

The air supply system is connected to the water supply system by a pipeline containing a series-mounted check valve 22 dehumidification and a valve 23 dehumidification.

In addition, the water supply system is connected to the foaming concentrate supply system by a pipeline containing a wash valve 24.

The air supply system provided with a sequentially mounted on the pipeline between the air compressor 4 and the mixing chamber 1 by the three-way tap 25 and check valve 26 air and electronic unit 27 of the control system air supply, the output of which is connected by an electric conductor with the input of the adjustable hydraulic pump 9 hydraulic transmission air compressor drive 4 and the input of which is electrically connected to the output of the sensor 28 of rotation of the air compressor 4.

In addition, the electrical input of the electronic control unit 20 of the foaming concentrate supply system and the electrical input of the electronic control unit 27 of the air supply system are electrically connected to the electrical output of the water flowmeter 6 (the connection is not shown in the figure). To obtain data on the current flow rate, these electrical inputs can be electrically connected to the electrical output of the electronic control unit 8 by the throttle valve 7, which receives this data from the water flowmeter 6.

The drives of the air compressor 4 and the foam pump 3 are independent of the fire pump drive (not shown in the figure).

The mobile fire extinguishing system is installed on the chassis of a ground vehicle (not shown in the figure), and it can be installed on railway mobile platforms.

A functional diagram of a mobile fire extinguishing systems with foam generating compression method is depicted in the figure, contains the following additional elements are part of the fire suppression system, including: a heat exchanger 29, which provide cooling oil to the adjustable hydraulic transmission drive the air compressor 4 and the adjustable hydraulic transmission actuator, foam pump 3; safety valves 30 and 31, providing protection of the adjustable hydraulic transmission of the air compressor drive 4 and the adjustable hydraulic transmission of the foam pump drive 3 from exceeding the prescribed oil pressure; water pressure sensor 32, foam concentrate pressure sensor 33 and air pressure sensor 34, providing the operator with information about the current state of the system; sensor 35 filling the foaming concentrate supply system, the electrical output of which is connected to the input of the electronic control unit 20 of the foaming concentrate supply system.

Mobile fire extinguishing system with foam generation by compression method, related to the second technical solution, works as follows.

Required water pressure is supplied to the water supply system with a pump water flow (figure not shown) from a reservoir (tank) (figure not shown), or by using a fire hydrant without an incremental increase in water pressure by the feed water pump or through a fire hydrant with an incremental increase in water pressure with a feed water pump that is selected depending on places of use. In the water supply system, the water pressure is controlled by the electronic control unit 8 using the water flowmeter 6, and is changed as necessary by the throttle valve 7, after which the water flows through the check valve 15 to the mixing chamber 1.

The drive motor 5 drives the hydraulic pump 9 and the hydraulic pump 11.

Depending on the water pressure, the data on which is received from the water flowmeter 6 (or the electronic control unit 8) to the electronic control unit 20 of the foaming concentrate supply system, the latter controls the operation of the adjustable hydraulic pump 11 of the hydraulic transmission of the drive, which drives the unregulated hydraulic motor 12, which in turn is the drive of the foam pump 3. In this case, the electronic unit 20 control the flow of the foaming concentrate receives data on the frequency of rotation of the foam pump 3 via the sensor 21 of the rotation of the foam pump, the flow rate of the blowing agent concentrate with a flow meter 18, and the filling of the supply system foaming concentrate by means of the sensor 35 fill. Depending on the required qualities of the foam-lighter ("dry") foam or heavier ("wet") foam at different water pressure, the foam pump 3 delivers from the tank (tank) (not shown in the figure) foaming concentrate through the check valve 19 to the mixing chamber 1 the required amount of foaming concentrate with the required head.

Depending on the water pressure, the data on which is received from the water flowmeter 6 (or the electronic control unit 8) to the electronic control unit 27 of the air supply system, the latter controls the operation of the adjustable hydraulic pump 9 of the hydraulic transmission of the drive, which drives the unregulated hydraulic motor 10, which in turn is the drive of the compressor 4. The electronic control unit 27 of the air supply system receives data on the frequency of rotation of the compressor 4 using the compressor rotation sensor 28. Depending on the required foam qualities-lighter ("dry") foam or heavier ("wet") foam at different water pressure, the compressor 4 delivers compressed air through the check valve 26 to the mixing chamber 1 the required amount of air under the required pressure.

Mobile fire extinguishing systems with foam generating compression method can control the system water flow by the sensor 32 of the water pressure, the supply system foaming concentrate with the help of the sensor 33 pressure of the blowing agent concentrate and the system air supply with a sensor 34 of the air pressure. On the basis of the obtained data, the operator can increase the water supply pressure, including by adjusting the opening of the throttle valve 7, at the same time, with a given type of foam of the foaming concentrate supply system and the air supply, the foaming concentrate supply pressure and the air supply pressure can be automatically changed. At the same time, according to the required parameters, the operator can also change the supply pressure of the foaming concentrate and the pressure of the supplied air, regardless of the supply water pressure.

In the mixing chamber 1, where the required amount of water, foaming concentrate and air are supplied under pressure, intensive borbotirovanie occurs, in which these components are converted into a finished foam. The finished foam from the mixing chamber 1 enters the device 2 foam supply to the fire.

After using a mobile fire extinguishing system with foam generation by compression method in the mode of obtaining compression foam, the said installation can be washed by closing the water tap 13, opening the washing tap 24, closing the foaming concentrate supply tap 16, and supplying water with a water supply pump (not shown in the figure) under pressure through the foaming concentrate supply system until the foaming concentrate residues are completely cleaned. After that, the mobile fire extinguishing unit with foam generation by compression method can be dried by closing the three-way tap 25, opening the drainage tap 23, closing the water supply tap (not shown in the figure), opening the water tap 13, opening the flushing tap 24, closing the foaming concentrate supply tap 16, and supplying air with the compressor 4 through the non-return valve 22, the water supply system and the foaming concentrate supply system, including through the open tap 17 for draining the foaming concentrate and the tap 14 for draining the water, until they draining.

The third proposed technical solution-a mobile fire extinguishing system with foam generation by compression method, is explained by the specific execution described below, however, the example given is not the only possible one, but clearly demonstrates the possibility of achieving this set of essential features of the claimed technical result.

The mobile fire extinguishing unit with foam generation by compression method comprises a mixing chamber 1, to the outlet of which the foam feeding device 2 is connected to the fire center, and connected by pipelines to the inlet of the mixing chamber 1, a water supply system including a water supply pump (not shown in the figure) and a water supply pump drive (not shown in the figure), a foaming concentrate supply system including a foam pump 3 and a foam pump drive 3, as well as an air supply system including an air compressor 4 and an air compressor drive 4. Mobile fire suppression system is equipped with installed on the water feed line between the feed water pump (in the figure not shown) and the mixing chamber 1 water meter 6, the throttle valve 7 by the actuator (in the figure not shown), and an electronic unit 8 throttle valve 7, the inlet block 8 electronic control throttle valve 7 is electrically connected with the output of the water meter 6, and the output of the electronic unit 8 throttle valve 7 is electrically connected to the input of the actuator of the throttle valve 7.

The foaming concentrate supply system includes a foaming concentrate tank (not shown in the figure) and a foaming concentrate feed valve 16, a foam pump 3, a foaming concentrate drain valve 17, a foaming concentrate flowmeter 18, a foaming concentrate check valve 19, and a foaming concentrate feed valve 16 installed in series on the pipeline between the foaming concentrate tank and the mixing chamber 1. The foaming concentrate supply system is also provided with an electronic control unit 20 of the foaming concentrate supply system, the inputs of which are connected by electric conductors to the outputs of the rotation sensor 21 of the foam pump 3 and the foam concentrate flowmeter 18, and the output is connected by an electric conductor to the input of the adjustable hydraulic pump 11 of the hydraulic transmission of the foam pump drive 3.

The air supply system provided with a sequentially mounted on the pipeline between the air compressor 4 and the mixing chamber 1 by the three-way tap 25 and check valve 26 air and electronic unit 27 of the control system air supply, the output of which is connected by an electric conductor with the input of the adjustable hydraulic pump 9 hydraulic transmission drive the air compressor 4, the input of which is connected to the sensor 28 of rotation of the air compressor 4.

The electrical input of the electronic control unit 20 of the foaming concentrate supply system and the electrical input of the electronic control unit 27 of the air supply system are electrically connected to the electrical output of the water flowmeter 6 (the connection is not shown in the figure). In this case, to obtain data on the current flow rate, these electrical inputs can be electrically connected to the electrical output of the electronic control unit 8 of the throttle valve 7, which receives this data from the water flowmeter 6.

The mobile fire extinguishing system is mounted on the chassis of the ground vehicle (not shown in the figure). It can also be installed on railway mobile platforms.

The functional diagram of the mobile fire extinguishing unit with foam generation by compression method, shown in the figure, contains the following auxiliary elements that are part of the fire extinguishing unit.

The water supply system includes a water tap 13 to shut off the water supply, a tap 14 to drain the water and a check valve 15 to prevent the compression foam from entering the water supply system.

The drive motor 5 is kinetically coupled to the adjustable hydraulic transmission of the air compressor drive 4 and the adjustable hydraulic transmission of the foam pump drive 3. An internal combustion engine is installed as the drive motor 5, and an electric motor can be used instead of an internal combustion engine. The adjustable hydraulic transmission of the air compressor drive 4 includes an adjustable hydraulic pump 9 and an unregulated hydraulic motor 10 of the air compressor drive 4 connected to it by pipelines. The adjustable hydraulic transmission of the foam pump drive 3 includes an adjustable hydraulic pump 11 and an unregulated hydraulic motor 12 connected to it by pipelines of the foam pump drive 3.

The air supply system is connected to the water supply system by a pipeline containing a series-mounted check valve 22 dehumidification and a valve 23 dehumidification.

In addition, the water supply system is connected to the foaming concentrate supply system by a pipeline containing a wash valve 24.

The mobile fire extinguishing unit with foam generation by compression method also contains a heat exchanger 29, which provides oil cooling in the adjustable hydraulic transmission of the air compressor drive 4 and the adjustable hydraulic transmission of the foam pump drive 3, safety valves 30 and 31, which protect the adjustable hydraulic transmission of the air compressor drive 4 and the adjustable hydraulic transmission of the foam pump drive 3 from exceeding the set oil pressure indicators, a water pressure sensor 32, the pressure sensor 33 of the foaming concentrate and the air pressure sensor 34, providing the operator with information about the current state of the system, the sensor 35 filling the foaming concentrate supply system, the electrical output of which is connected to the input of the electronic control unit 20 of the foaming concentrate supply system.

Mobile fire extinguishing system with foam generation by compression method, related to the third technical solution, works as follows.

Required water pressure is supplied to the water supply system using the feed water pump (not shown in the diagram) from the reservoir (tank) (figure not shown), or by using a fire hydrant without an incremental increase in water pressure by the feed water pump or through a fire hydrant with an incremental increase in water pressure with a feed water pump that is selected depending on places of use. In the water supply system, the water pressure is controlled by the electronic control unit 8 with the help of the water flowmeter 6 and is changed, if necessary, by means of the throttle valve 7, after which the water enters through the check valve 15 into the mixing chamber 1. Thus, when the foam backpressure increases or decreases at the outlet of the mobile fire extinguishing unit, the water flowmeter 6 records the data on the increase or decrease in the water flow rate, respectively, and directs them to the control unit 8, which, in accordance with a given type of foam (lighter ("dry") foam or heavier ("wet") foam) controls the opening value of the throttle valve 7, so that the necessary water pressure for the formation of compression foam enters the mixing chamber 1.

The drive motor 5 drives the hydraulic pump 9 and the hydraulic pump 11.

Depending on the water pressure, which is received from the flow meter 6 water (or electronic control unit 8) to the electronic unit 20 control the feed of the blowing agent concentrate, the latter controls the operation of the adjustable hydraulic pump 11, hydraulic transmission drive, which leads to the movement of unregulated hydraulic motor 12, which in turn is driven foam pump 3. In this case, the electronic unit 20 control the flow of the foaming concentrate receives data on the frequency of rotation of the foam pump 3 via the sensor 21 of the rotation of the foam pump, the flow rate of the blowing agent concentrate with a flow meter 18, and the filling of the supply system foaming concentrate with the filling sensor 35. Depending on the required qualities of the foam-lighter ("dry") foam or heavier ("wet") foam at different water pressure, the foam pump 3 delivers from the tank (tank) (not shown in the figure) foaming concentrate through the check valve 19 to the mixing chamber 1 the required amount of foaming concentrate with the required head.

Depending on the water pressure, the data on which is received from the water flowmeter 6 (or the electronic control unit 8) to the electronic control unit 27 of the air supply system, the latter controls the operation of the adjustable hydraulic pump 9 of the hydraulic transmission of the drive, which drives the unregulated hydraulic motor 10, which is the drive of the compressor 4. The electronic control unit 27 of the air supply system receives data on the frequency of rotation of the compressor 4 using the compressor rotation sensor 28. Depending on the required foam qualities-lighter ("dry") foam or heavier ("wet") foam at different water pressure, the compressor 4 delivers compressed air through the check valve 26 to the mixing chamber 1 the required amount of air under the required pressure.

Mobile fire extinguishing systems with foam generating compression method can control the system water flow by the sensor 32 of the water pressure, the supply system foaming concentrate with the help of the sensor 33 pressure of the blowing agent concentrate and the system air supply with a sensor 34 of the air pressure. Based on the data obtained, the operator can increase the water supply pressure, including by adjusting the opening of the throttle valve 7. At the same time, at a given foam type, the foaming concentrate supply system and the air supply system automatically change the foaming concentrate supply pressure and the air supply pressure. According to the required parameters, the operator can also change the foaming concentrate supply pressure and the air supply pressure independently of the water supply pressure.

In the mixing chamber 1, where the required amount of water, foaming concentrate and air is supplied under pressure, intensive borbotirovanie occurs, in which these components are converted into a finished foam. The finished foam from the mixing chamber 1 enters the device 2 foam supply to the fire.

After using a mobile fire extinguishing system with foam generation by compression method in the mode of obtaining compression foam, the said installation can be washed by closing the water tap 20, opening the washing tap 24, closing the foaming concentrate supply tap 16, and supplying water with a water supply pump (not shown in the figure) under pressure through the foaming concentrate supply system until the foaming concentrate residues are completely cleaned. After that, the mobile fire extinguishing unit with foam generation by compression method can be dried by closing the three-way tap 25, opening the drainage tap 23, closing the water supply tap (not shown in the figure), opening the water tap 13, opening the flushing tap 24, closing the foaming concentrate supply tap 16, and supplying air with the compressor 4 through the non-return valve 22, the water supply system and the foaming concentrate supply system, including through the open tap 17 for draining the foaming concentrate and the tap 14 for draining the water, until they draining.

## Claims

1. Mobile fire extinguishing system with foam generation by compression method, comprising a mixing chamber connected at the outlet to the foam supply device to the fire, and connected by pipelines to the inlet of the mixing chamber water supply system, including a water supply pump and a water supply pump drive, a foaming concentrate supply system, including a foam pump and a foam pump drive, as well as an air supply system, including an air compressor and an air compressor drive, **characterized in that** it additionally includes a drive motor, equipped with installed on the water feed line between the feed water pump and a mixing chamber with a water meter, butterfly valve with electric actuator and return valve and electronic control unit throttle valve, the input of the control unit throttle valve is electrically connected with the output of water flow meter, the output of the control unit throttle valve electrically connected to the input of the actuator of the throttle valve, and drives the air compressor and foam pump made in the form of adjustable hydraulic transmission actuator of an air compressor and adjustable hydraulic transmission actuator, foam pump, kinetically connected to a drive motor.

2. Mobile fire extinguishing system according to claim 1, **characterized in that** the drive motor is an internal combustion engine or an electric motor, wherein the drives of the air compressor and the foam pump are independent of the drive of the fire pump.

3. Mobile fire-extinguishing installation according to claim 1, **characterized in that** the adjustable hydraulic transmission drive air compressor includes an adjustable hydraulic pump and connected with it by piping unregulated hydraulic motor to drive an air compressor, and adjustable hydraulic transmission drive the foam pump includes an adjustable hydraulic pump and connected with it by piping unregulated hydraulic motor driven foam pump.

4. Mobile fire-extinguishing installation according to p. 1, **characterized in that** the water supply system contains sequentially installed in the pipeline between the pump water inlet and the mixing chamber water faucet, water flow meter, drain valve water throttle valve and the electric valve and an electronic control unit throttle valve, the electrical output of water flow meter is electrically connected with the input of the electronic control throttle valve, and the output of the electronic control unit throttle valve is connected by an electric conductor to the input of the electric throttle valve, a foaming concentrate feed system includes a foaming concentrate tank and a foaming concentrate feed valve, a foam pump, a foaming concentrate drain valve, a foaming concentrate flowmeter, a foaming concentrate check valve installed in series on the pipeline between the foaming concentrate tank and the mixing chamber, and is equipped with an electronic control unit of the foaming concentrate feed system, inputs of which are connected by electrical conductors to the outputs of the rotation sensor of the foam pump and flow meter of the blowing agent concentrate, and the output connected by an electric conductor with the input of the adjustable hydraulic pump hydraulic transmission actuator, foam pump, in addition, the air supply system provided with a sequentially mounted on the pipeline between the air compressor and mixing chamber three-way valve and return air valve, and electronic control unit air supply, the output of which is connected by an electric conductor with the input of the adjustable hydraulic pump hydraulic transmission actuator of an air compressor and an input coupled to a rotation sensor for an air compressor, while the electrical input of the electronic control unit supply system of the blowing agent concentrate and the electrical input of the electronic control unit of the air-supply system electrically connected to an electric outlet or water flow meter with an electric output of the electronic control unit throttle valve.

5. Mobile fire-extinguishing installation according to claim 1, **characterized in that** the air supply system is connected to the water supply system piping that contains successively installed check valve and drainage tap drainage and water supply system is connected to the supply system foaming concentrate pipe containing the faucet rinsing.

6. Mobile fire extinguishing system according to claim 1, **characterized in that** it is installed on the chassis of a land vehicle or on railway mobile platforms.

7. Mobile installation of fire extinguishing with the generation of foam compression method, including a mixing chamber connected to the output feeder of the foam in the fire, and associated with the entrance of the mixing chamber by pipelines, the water supply system, including feed water pump to the actuator, the supply system of the blowing agent concentrate comprising a foam pump driven foam pump and the air supply system including air compressor is driven, **characterized in that** it further provided with a drive motor, and drives the air compressor and foam pump made in the form of kinetically coupled with a drive motor adjustable hydraulic transmission actuator of an air compressor and adjustable hydraulic transmission drive the foam pump.

8. Mobile fire extinguishing system according to claim 7, **characterized in that** the drive motor is an internal combustion engine or an electric motor, wherein the drives of the air compressor and the foam pump are independent of the drive of the fire pump.

9. Mobile fire-extinguishing installation according to claim 7, **characterized in that** the adjustable hydraulic transmission drive air compressor includes an adjustable hydraulic pump and connected with it by piping unregulated hydraulic motor to drive an air compressor, and adjustable hydraulic transmission drive the foam pump includes an adjustable hydraulic pump and connected with it by piping unregulated hydraulic motor driven foam pump.

10. Mobile fire-extinguishing installation according to p. 7, **characterized in that** the water supply system contains sequentially installed in the pipeline between the pump water inlet and the mixing chamber water faucet, water flow meter, drain valve water throttle valve and the electric valve and an electronic control unit throttle valve, the electrical output of water flow meter is electrically connected with the input of the electronic control throttle valve, and the output of the electronic control unit throttle valve is connected by an electric conductor to the input of the electric throttle valve, a foaming concentrate feed system includes a foaming concentrate tank and a foaming concentrate feed valve, a foam pump, a foaming concentrate drain valve, a foaming concentrate flowmeter, a foaming concentrate check valve installed in series on the pipeline between the foaming concentrate tank and the mixing chamber, and is equipped with an electronic control unit of the foaming concentrate feed system, the inputs of which are connected by electrical conductors to the outputs of the rotation sensor of the foam pump and the flowmeter of the foaming concentrate, and the output is connected by an electric conductor with the input of the adjustable hydraulic pump hydraulic transmission actuator, foam pump, in addition, the air supply system provided with a sequentially mounted on the pipeline between the air compressor and mixing chamber three-way valve and return air valve, and an electronic control unit of the air-supply system, the output of which is connected by an electric conductor with the input of the adjustable hydraulic pump hydraulic transmission drive air compressor, and an input coupled to a rotation sensor for an air compressor, while the electrical input of the electronic control unit supply system of the blowing agent concentrate and the electrical input of the electronic control unit of the air-supply system electrically connected to an electric outlet or water flow meter with an electric output of the electronic control unit throttle valve.

11. Mobile fire-extinguishing installation according to claim 7, **characterized in that** the air supply system is connected to the water supply system piping that contains successively installed check valve and drainage tap drainage and water supply system is connected to the supply system foaming concentrate pipe containing the faucet rinsing.

12. Mobile fire extinguishing system according to claim 7, **characterized in that** it is installed on the chassis of a land vehicle or on railway mobile platforms.

13. Mobile fire extinguishing system with foam generation by compression method, comprising a mixing chamber connected at the outlet to the foam supply device to the fire, and connected by pipelines to the inlet of the mixing chamber water supply system, including a water supply pump and a water supply pump drive, a foaming concentrate supply system, including a foam pump and a foam pump drive, as well as an air supply system, including an air compressor and an air compressor drive, **characterized in that**, it is fitted with installed on the water feed line between the feed water pump and a mixing chamber with a water meter, butterfly valve with electric actuator and return valve and electronic control unit throttle valve, the input of the control unit throttle valve is electrically connected with the output of water flow meter, and the output control unit throttle valve electrically connected to the input of the actuator of the throttle valve.

14. Mobile fire-extinguishing installation according to p. 13, **characterized in that** the foaming concentrate supply system includes a foaming concentrate tank and a foaming concentrate feed valve, a foam pump, a foaming concentrate drain valve, a foaming concentrate flowmeter, a foaming concentrate check valve installed in series on the pipeline between the foaming concentrate tank and the mixing chamber, and is equipped with an electronic control unit of the foaming concentrate supply system, inputs of which are connected by electrical conductors to the outputs of the rotation sensor of the foam pump and flow meter of the blowing agent concentrate, and the output connected by an electric conductor with the input of the adjustable hydraulic pump hydraulic transmission actuator, foam pump, and air supply system provided with a sequentially mounted on the pipeline between the air compressor and mixing chamber three-way valve and return air valve, and electronic control unit air supply, the output of which is connected by an electric conductor with the input of the adjustable hydraulic pump hydraulic transmission actuator of an air compressor and an input coupled to a rotation sensor for an air compressor, while the electrical input of the electronic control unit supply system of the blowing agent concentrate and the electrical input of the electronic control unit of the air-supply system electrically connected to an electric outlet or water flow meter with an electric output of the electronic control unit throttle valve.

15. Mobile fire extinguishing system according to claim 13, **characterized in that** it is installed on the chassis of a land vehicle or on railway mobile platforms.
